Europäisches Patentamt

European Patent Office

Office européen des brevets

(11) Numéro de publication: **0 427 618 A1**

# (12) DEMANDE DE BREVET EUROPEEN

(21) Numéro de dépôt: 90403147.3

(22) Date de dépôt: 07.11.90

(51) Int. Cl.⁵: **C22C 37/08**, C03B 23/03

(30) Priorité: 09.11.89 DE 3937347

(43) Date de publication de la demande:
15.05.91 Bulletin 91/20

(84) Etats contractants désignés:
**BE CH DE ES FR GB IT LI LU**

(71) Demandeur: **SAINT-GOBAIN VITRAGE INTERNATIONAL**
**"Les Miroirs" 18, avenue d'Alsace**
**F-92400 Courbevoie(FR)**
(84) **BE CH ES FR GB IT LI LU**

Demandeur: **VEGLA Vereinigte Glaswerke GmbH**
**Viktoriaallee 3-5**
**W-5100 Aachen(DE)**
(84) **DE**

(72) Inventeur: **Jacob, Michel**
**37, avenue Jean-Moulin**
**F-75014 Paris(FR)**
Inventeur: **Kuster, Hans-Werner**
**Schervierstrasse 20**
**W-5100 Aachen(DE)**

(74) Mandataire: **Menes, Catherine et al**
**SAINT-GOBAIN RECHERCHE 39, Quai Lucien Lefranc**
**F-93300 Aubervilliers(FR)**

(54) **Utilisation de certaines compositions de fonte pour des formes de bombage par pressage de feuilles de verre.**

(57) L'invention propose pour la réalisation d'une forme de bombage par pressage l'emploi d'une fonte dont la composition est la suivante : carbone : jusqu'à 3,2 %, silicium : 2,0-2,5 %, chrome : 2,0-3,0 %, nickel : 18,0-22,0 %, fer : complément à 100 %.
L'invention s'applique à la production de vitrages bombés.

EP 0 427 618 A1

## UTILISATION DE CERTAINES COMPOSITIONS DE FONTE POUR DES FORMES DE BOMBAGE PAR PRESSAGE DE FEUILLES DE VERRE

La présente invention a trait aux techniques de bombage par pressage de feuilles de verre et concerne plus précisément l'emploi de fontes de compositions particulières pour réaliser des formes de bombage. L'invention s'applique à la fabrication de vitrages bombés destinés notamment aux véhicules automobiles.

Bien que différents avantages plaident en faveur de l'utilisation de la fonte pour la fabrication des formes de bombage, notamment en raison de la possibilité d'un moulage, en pratique on ne l'utilise pas comme matériau de base des outils de bombage de feuilles de verre. Ceci s'explique par la difficulté qu'il y a à conserver leur forme primitive à des outils en fonte, ceci en raison de la dilatation thermique qui se produit aux températures de la chambre de bombage et qui entraîne au cours du temps des réarrangements de la structure de la fonte (voir FR-B-962 285 ou les brevets équivalents US-A-2 330 279 et US-A-2 302 764). Les fontes de composition ordinaire sont tout particulièrement inadaptées aujourd'hui où l'exigence d'une stabilité de forme des outils de bombage est devenue une exigence première car on cherche à obtenir une parfaite conformité au galbe des feuilles de verre bombées.

L'invention a pour but de trouver des compositions d'alliages de fonte pouvant être employées pour la fabrication de formes de bombage car ne présentant pas cet inconvénient connu d'un cangement de forme et de volume aux températures d'emploi des formes de bombage.

Il a été trouvé selon l'invention que ce but est atteint par l'utilisation pour des formes de bombage par pressage de feuilles de verre d'une fonte à structure austénitique dont la composition entre dans les limites suivantes exprimées en pourcentages pondéraux :
températures d'emploi des formes de bombage.

| * carbone | jusqu'à 3,2 % |
|-----------|----------------|
| * silicium | 2,0 - 2,5 % |
| * chrome | 2,0 - 3,0 % |
| * nickel | 18,0 - 22 % |
| * fer | complément à 100 % |

Du brevet GB-A-731 831, il est connu des fontes dont tes compositions correspondent pour l'essentiel à ces linites. Selon ce document, il est recommandé d'utiliser de tels alliages dans des machines à tréfiler, pour des porte-filières munis de pièces en diamant. Ces alliages présentent, notamment dans le cas du tréfilage du cuivre, l'avantage de former un potentiel électrochimique faible spécifiquement par rapport au métal du fil à étirer, ce qui limite les risques d'une dissolution par corrosion électrochimique des pièces en diamant associés aux porte-filières.

Des fontes de cette composition conviennent que leur structure soit du type à graphite lamellaire ou à graphite sphéroïdal. Une structure à graphite sphéroïdal peut être obtenue conformément à l'art en ajoutant à la fonte en fusion des additifs propices à la formation de nodules de graphite.

La résistance thermique de telles fontes est particulièrement élevée de sorte que celles-ci conviennent tout particulièrement bien à la réalisation d'outils de bombage même si de telles fontes sont relativement difficiles à être produites et travaillées. Elles ont l'avantage de présenter une déformation et une dilatation particulièrement faibles même après une exposition prolongée à température élevée.

Les formes de bombage sont produites par les techniques usuelles de fonderie et de travail de la fonte.

**Revendications**

1. Utilisation pour des formes de bombage par pressage le feuilles de verre d'une fonte de type perlitique-ferritique dont la composition entre dans les limites suivantes, exprimées en pourcentages pondéraux :

| * carbone | jusqu'à 3,0 % |
|-----------|---------------|
| * silicium | 2,0-2,5 % |
| * chrome | 2,0-3,0 % |
| * nickel | 18,0-22,0 % |
| * fer | complément à 100 %. |

2. Procédé selon la revendication 1, **caractérisé en ce que** ladite fonte a une structure à graphite lamellaire.

3. Procédé selon la revendication 2, **caractérisé en ce que** ladite fonte a une structure à graphite sphéroïdal. phite sphéroïdal.

Office européen
des brevets

**RAPPORT DE RECHERCHE
EUROPEENNE**

Numéro de la demande

**EP 90 40 3147**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | BROCHURE: "Ni-resist austenitic cast irons", 1965, International Nickel Ltd<br>* Page 3: "Flake-graphite Ni-resist irons" et table 1; page 4: "Spheroidal-graphite Ni-resist irons" et table 2, avec resp. "type 2 - AUS 102A, type 2B - AUS 102b et type D-2 - AUS 202A, type D-2B - AUS 202B; page 45; "Application: glass mould" * | 1-3 | C 22 C<br>37/08<br>C 03 B 23/03 |
| Y | E. PIWOWARSKY: "Hochwertiges Gusseisen (Grauguss), edition 2, 1958, pages 1020-1025, Springer Verlag, Berlin, DE; g) "Gusseisen für Glasformen"<br>* Page 1021, en bas - page 1022 * | 1-3 | |
| Y | "Metals Handbook", edition 9, vol. 1: "Properties and selection: Irons and steels", American Society for Metals, Metals Park, Ohio, US<br>* Pages 94,96: "High-nickel irons" * | 1-3 | |

| DOMAINES TECHNIQUES RECHERCHES (Int. Cl.5) |
|---|
| C 22 C 37/08<br>C 03 B 23/03 |

Le présent rapport de recherche a été établi pour toutes les revendications

| Lieu de la recherche | Date d'achèvement de la recherche | Examinateur |
|---|---|---|
| La Haye | 01 février 91 | LIPPENS M.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant